# EUROPÄISCHE PATENTSCHRIFT

(11) **EP 3 431 908 B1**
(45) Veröffentlichungstag und Bekanntmachung des Hinweises auf die Patenterteilung: **01.11.2023**
(21) Anmeldenummer: 18177570.1
(22) Anmeldetag: 13.06.2018
(51) Int. Cl.: F25D 23/06, F25D 31/00

(54) **VERFAHREN ZUR PASSGENAUEN POSITIONIERUNG EINES INNENKESSELS IM AUSSENKESSEL EINES KLIMASCHRANKS UND KLIMASCHRANK**
METHOD FOR PRECISELY POSITIONING AN INNER CASING IN AN EXTERNAL CASING OF AN AIR CONDITIONED CABINET AND AIR CONDITIONED CABINET
PROCÉDÉ DE POSITIONNEMENT EXACT D'UN RÉCIPIENT INTERNE DANS UN RÉCIPIENT EXTERNE D'UNE ARMOIRE CLIMATISÉE ET ARMOIRE CLIMATISÉE

(30) Priorität: 21.07.2017 DE 102017116527
(43) Veröffentlichungstag der Anmeldung: 23.01.2019
(73) Patentinhaber: Binder GmbH, 78532 Tuttlingen (DE)
(72) Erfinder: Bernedo Juez, Paula, 78532 Tuttlingen (DE); Zeller, Nina, 78652 Deisslingen (DE)
(74) Vertreter: Westphal, Mussgnug & Partner Patentanwälte mbB

(56) Entgegenhaltungen:
- DE-A1- 19 711 311
- DE-A1-102009 002 796
- DE-C2- 4 406 145
- DE-T2- 69 011 953
- JP-A- 2001 201 248
- US-A- 2 639 593

## Beschreibung

Die Erfindung betrifft ein Verfahren zur passgenauen Positionierung eines Innenkessels im Außenkessel eines Klimaschranks und Klimaschrank.

Klimaschränke mit einem Innenkessel, einem Außenkessel und einer zumindest abschnittsweise zwischen Außenkessel und Innenkessel angeordneten Heiz- und/oder Kühlvorrichtung sind seit vielen Jahren, beispielsweise aus der DE 33 29 855 A1 oder der DE 37 27 298 A1, bekannt. Trotz dieser langen Bekanntheit des Produkts ist eine Schwachstelle bei dessen Herstellung aber noch immer die Anordnung der Innenkessels im bzw. am Außenkessel, die nicht nur stabil sein soll, sondern darüber hinaus auch insbesondere an der deckenseitigen Kontaktlinie von Innenkesselwänden zum Außenkessel trotz auftretender Fertigungstoleranzen möglichst passgenau sein sollte. Selbst wenn in diesen Fertigungsschritt zwei Mitarbeiter involviert werden, bleibt seine Prozesssicherheit und Reproduzierbarkeit problematisch.

Die DE 10 2009 002796 A1 offenbart ein Verfahren zur passgenauen Positionierung eines Regalmoduls in einem Kältegerät mit den Merkmalen des Oberbegriffs des Patentanspruchs 1 und ein Kältegerät mit den Merkmalen des Oberbegriffs des Patentanspruchs 3.

Die Aufgabe der Erfindung besteht daher darin, ein Verfahren zur passgenauen Positionierung eines Innenkessels im Außenkessel eines Klimaschranks und einen Klimaschrank mit passgenau positionierbarem Innenkessel bereitzustellen. Diese Aufgabe wird gelöst durch ein Verfahren zur passgenauen Positionierung eines Innenkessels im Außenkessel eines Klimaschranks mit den Merkmalen des Anspruchs 1 und durch einen Klimaschrank mit passgenau positionierbarem Innenkessel mit den Merkmalen des Anspruchs 3. Vorteilhafte Weiterbildungen der Erfindung sind Gegenstand der jeweiligen abhängigen Ansprüche.

Das erfindungsgemäße Verfahren zur passgenauen Positionierung eines Innenkessels im Außenkessel eines Klimaschranks weist die folgenden Schritte auf:
- Bereitstellen eines Außenkessels mit einer Decke und einem der Decke gegenüber liegenden Boden,
- Bereitstellen mindestens einer Komponente eines Innenkessels, und
- Positionieren der mindestens einen Komponente des Innenkessels zwischen Decke und Boden im Außenkessel.

Erfindungswesentlich ist,
- dass mindestens eine Komponente des Innenkessels bereitgestellt wird, die eine geringere Höhe hat als die durch den Abstand zwischen der Decke und dem Boden des Außenkessels vorgegebene Höhe des Innenraums des Außenkessels und an der mindestens ein Fuß derart beweglich angeordnet ist, dass die Höhe der mindestens einen bereitgestellten Komponente des Innenkessels einschließlich dem mindestens einen daran beweglich angeordneten Fuß variabel ist,
- dass durch eine Veränderung der Position des mindestens einen Fußes bei in dem Außenkessel angeordneter Komponente des Innenkessels eine passgenaue Positionierung herbeigeführt wird, bei der die Komponente des Innenkessels an der Decke des Außenkessels abgestützt ist und der mindestens eine Fuß an dem Boden des Außenkessels abgestützt ist,
- dass der Fuß in der Position, in der er die passgenaue Positionierung herbeiführt, fixiert wird, und
- dass die passgenaue Positionierung durch eine Verschiebung der Position des Fußes in einer zum Boden des Außenkessels parallelen Ebene erfolgt.

Es wird also der bisher stets verwendete Ansatz, die Komponente des Innenkessels möglichst exakt an die entsprechende Dimension des Außenkessels anzupassen aufgegeben und stattdessen bewußt eine "zu kleine" Komponente des Innenkessels verwendet, die erst durch das Einstellen der beweglich an der Komponente des Innenkessels angeordneten Füße passgenau mit der Decke des Außenkessels in Kontakt gebracht wird. Dies ermöglicht nicht nur, die jeweiligen Toleranzen des Außenkessels zu kompensieren, sondern erweist sich auch als deutlich einfacher im Hinblick auf die Durchführung dieses Arbeitsschritts, da sich das Einführen einer passgenau zum Außenkessel dimensionierten Komponente des Innenkessels oftmals als schwierig erweist. Grundsätzlich sei an dieser Stelle angemerkt, dass der Begriff "Klimaschrank" breit zu verstehen ist. Unter einem Klimaschrank wird hier jede schrankartige Vorrichtung verstanden, in deren Innenraum eine von den Umgebungsbedingungen abweichende Temperatur einstellbar ist. Dazu weisen Klimaschränke in der Regel eine Heiz- und/oder Kühlvorrichtung auf, die zumindest abschnittsweise -also beispielsweise mit einer Kühl- oder Heizschlange- im Innenraum des Außenkessels, vorzugsweise zwischen Außenkessel und Innenkessel angeordnet sein kann. Zumindest der Innenraum des Innenkessels ist üblicherweise durch Türen oder Klappen zugänglich; die Richtung, aus der er zugänglich ist, gibt eine Beladungsrichtung vor.

Dementsprechend kann insbesondere das Bereitstellen des Außenkessels so erfolgen, dass der bereits in den späteren Klimaschrank eingebaute Außenkessels komplett mit dem späteren Klimaschrank und der Heiz- und/oder Kühlvorrichtung bereitgestellt wird; es kann aber auch der Außenkessel als Einzelkomponente mit mehr oder weniger zusätzlichen Anbauteilen vorkonfiguriert bereitgestellt werden.

Ein Außenkessel weist typischerweise mindestens zwei Seitenwände, einen Boden und eine Decke sowie gegebenenfalls auch eine Rückwand auf.

Der Innenkessel kann einstückig ausgeformt sein, was dann dazu führt, dass die einzige Komponente des Innenkessels der Innenkessel selbst ist. Typischerweise ist er aber aus mehreren Einzelteilen oder Komponenten aufgebaut, beispielsweise aus Seitenwänden, zwischen denen dann eine innere Rückwand oder ein Boden gehalten wird. Er kann aber auch nur Seitenwände aufweisen.

Erfindungsgemäß ist vorgesehen, dass die passgenaue Positionierung durch eine Verschiebung der Position des Fußes in einer zum Boden des Außenkessels parallelen Ebene erfolgt, wobei besonders bevorzugt ist, dass die Verschiebung der Position des Fußes in Richtung parallel zu der Komponente des Innenkessels erfolgt, an der der Fuß angeordnet ist. Dies kann insbesondere die zur Zugangsrichtung parallele Verlaufsrichtung einer Seitenwand des Innenkessels sein, wenn diese den oder die Füße aufweist. Vorteilhaft sind diese Maßnahmen deshalb, weil die "Arbeitsrichtung", in die man Kraft ausüben muss, um die passgenaue Einpassung der Komponente des Innenkessels zu erreichen, die Zugangsrichtung ist, was die Kraftausübung erleichtert. Beispielsweise kann durch eine Lagerung der Füße in einem schräg zum Boden des Außenkessels verlaufenden Langloch oder Schlitz, in dem ein an der entsprechenden Komponente, insbesondere an einer Seitenwand, des Innenkessels gelagerter Bolzen geführt ist, die passgenaue Anordnung durch Druck in Zugangs- oder Beladungsrichtung des Klimaschranks herbeigeführt werden, während beispielsweise bei Schraubfüßen ein unpraktisches Herumfingern notwendig wäre, um in Bodennähe befindliche Schrauben anzuziehen.

Der erfindungsgemäße Klimaschrank hat einen Außenkessel mit einer Decke und einem Boden, deren Abstand die Höhe eines Innenraums des Außenkessels definiert, einen in dem Außenkessel angeordneten Innenkessel und eine zumindest abschnittsweise zwischen dem Außenkessel und dem Innenkessel angeordneten Heiz- und/oder Kühlvorrichtung. Selbstverständlich kann er darüber hinaus, wie bei Klimaschränken weit verbreitet, zusätzlich Türen, eine Außenhaut, ein Gestell oder Füße aufweisen.

Erfindungswesentlich ist, dass mindestens eine Komponente des Innenkessels -beispielsweise eine Seitenwand- eine geringere Höhe hat als die durch den Abstand zwischen der Decke und dem Boden des Außenkessels vorgegebene Höhe des Innenraums des Außenkessels, wobei an dieser Komponente mindestens ein Fuß derart beweglich angeordnet ist, dass die Höhe der mindestens einen bereitgestellten Komponente des Innenkessels einschließlich des mindestens einen daran angeordneten Fußes variabel ist, so dass durch eine Veränderung der Position des mindestens einen Fußes bei in dem Außenkessel angeordneter Komponente des Innenkessels eine passgenaue Positionierung herbeigeführt werden kann, bei der die Komponente des Innenkessels an der Decke des Außenkessels abgestützt ist und der mindestens eine Fuß an dem Boden des Außenkessels abgestützt ist und dass der mindestens eine Fuß mit einem Fixiermittel in dieser Position fixierbar ist. Der Vorteil dieser speziellen Augestaltung liegt insbesondere darin, dass die an den Außenkessel angepasste Anordnung des Innenkessels durch einfache Arbeitsschritte mit sehr guter Genauigkeit erreicht werden kann.

Erfindungsgemäß ist ein solcher Klimaschrank, wenn der mindestens eine Fuß so an der Komponente des Innenkessels angeordnet ist, dass die Höhe der mindestens einen bereitgestellten Komponente des Innenkessels mit dem mindestens einen daran angeordneten Fuß durch eine Verschiebung parallel zur durch den Boden des Außenkessels definierten Ebene variiert werden kann, wobei es bevorzugt ist, wenn der mindestens eine Fuß so an der Komponente des Innenkessels angeordnet ist, dass die Höhe der mindestens einen bereitgestellten Komponente des Innenkessels mit dem mindestens einen daran angeordneten Fuß durch eine Verschiebung parallel zu der Komponente des Innenkessels, an der der Fuß angeordnet ist, variiert werden kann. Dies gilt insbesondere für eine Verschiebung parallel zu einer Seitenwand des Innenkessels als hier relevante Komponente des Innenkessels in Zugangs- bzw. Beladungsrichtung des Klimaschranks, die ein besonders einfaches und direktes Einwirken ermöglicht.

Konkret kann eine solche Anordnung des Fußes an der Komponente des Innenkessels dadurch bewirkt werden, dass die Komponente des Innenkessels mindestens einen Bolzen aufweist und dass der mindestens eine Fuß ein Langloch aufweist, in dem der Bolzen geführt ist, wobei der Abstand des Langlochs von dem dem Boden des Außenkessels zugewandten Ende des Fußes variiert. Bei Verschiebung des auf dem Boden des Außenkessels abgestützten Fu-βes wird dann die Komponente des Innenkessels nach oben gedrückt und so an die Ausdehung des jeweiligen Außenkessels angepasst.

Bevorzugt ist insbesondere, wenn das Langloch unter einem Winkel von etwa 45° relativ zum Boden des Außenkessels verläuft. Vorteilhaft ist es weiterhin, wenn der Fuß eine Fläche zum Einleiten einer Verschiebekraft aufweist, weil diese es bei der Montage erleichtert, eine entsprechende Kraft einzuleiten. Die Erfindung wird nachfolgend an Hand von Figuren, die ein Ausführungsbeispiel zeigen, näher erläutert. Es zeigt:
- Fig.1a:: Einen Klimaschrank mit geöffneten Türen,
- Fig.1b:: eine Ausschnittsvergrößerung aus Figur 1a, die die Positionierung einer Komponente des Innenkessels im Außenkessel zeigt,
- Fig 1c:: eine noch stärkere Ausschnittsvergrößerung aus Figur 1a, die detailliert die Anordnung eines den Innenkessel abstützenden Fußes am Innenkessel zeigt,
- Fig. 2a:: eine erste Ansicht eines Fußes, und
- Fig. 2b:: eine zweite Ansicht des Fußes aus Fig. 2a.

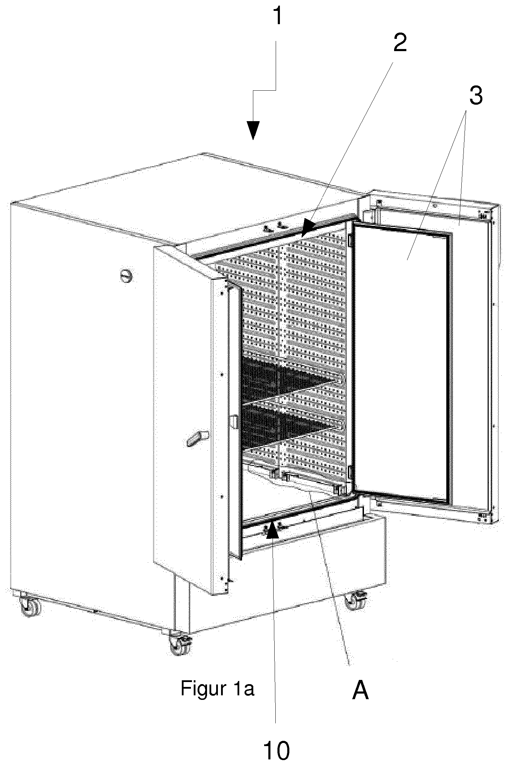

Figur 1a zeigt einen Klimaschrank 1 mit geöffneten Türen 3, so dass der Blick in das Innere des Klimaschranks freigegeben ist. Man erkennt, dass der Klimaschrank 1 einen Außenkessel 10 aufweist, in dem ein aus Komponenten 21 zusammengesetzter Innenkessel 2 angeordnet ist. Am Innenkessel 3 sind in diesem Ausführungsbeispiel eines Klimaschranks 1 Regalböden 4 angeordnet. Die Heiz- und-/oder Kühlvorrichtung des Klimaschranks 1 ist in der Darstellung der Figur 1a nicht erkennbar, weil sie durch dein Innenkessel 3 bzw. dessen Komponenten 21 verdeckt ist.

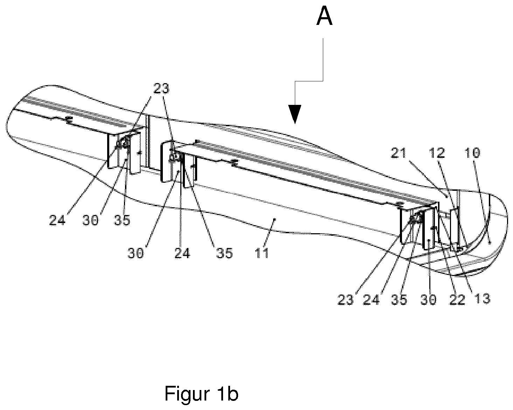

Figur 1b zeigt einen Ausschnitt A des Blicks in das Innere des Klimaschranks 1, genauer gesagt in dessen vordere rechte untere Ecke. Man erkennt einen Abschnitt des Außenkessels 10 und von dessen Boden 11 und den Übergangsbereich 12 zu seiner rechten Seitenwand 13, die aber weitgehend von einer Komponente 21 des Innenkessels 2, hier der rechten Seitenwand des Innenkessels 2, verdeckt ist.

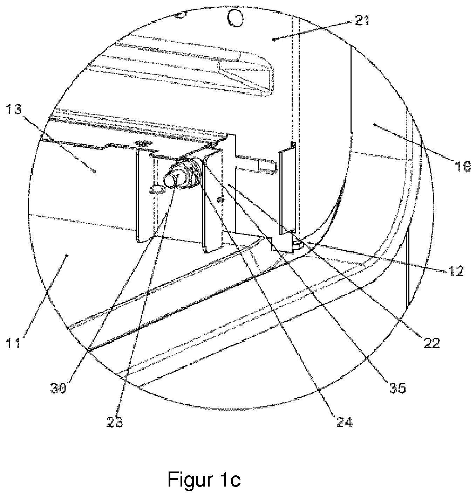

Die Komponente 21 des Innenkessels 2 steht offensichtlich nicht direkt auf dem Boden 11 des Außenkessels 10 auf, sondern ist dort durch mehrere Füße 30 abgestützt, woraus sich unmittelbar und zwingend ergibt, dass die Komponente 21 des Innenkessels 2 eine geringere Höhe hat als die durch den Abstand zwischen der in Figur 1 nicht erkennbaren Decke und dem Boden 11 des Außenkessels 10 vorgegebene Höhe des Innenraums des Außenkessels 10.

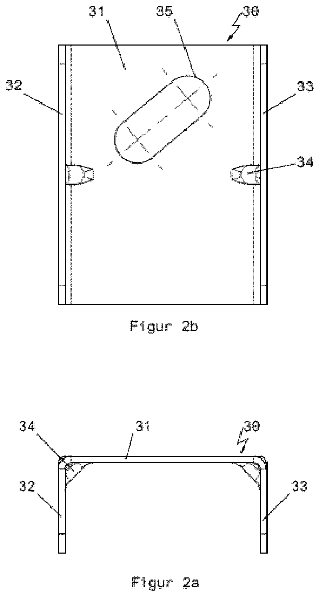

Die spezifische Ausgestaltung des Fußes wird nun anhand der Figuren 2a und 2b näher erläutert.

Wie man in den Figuren 2a und 2b gut erkennt, hat der Fuß 30 einen in etwa U-förmigen Querschnitt mit einem Rücken 31 und zwei senkrecht zur Fläche des Rückens 31 stehenden Seitenwänden 32,33, die mit Verstärkungen 34 gegen Umbiegen gesichert sind. Im Rücken 31 des Fußes 30 ist ein schräg von rechts oben nach links unten verlaufendes Langloch 35 angeordnet.

Betrachtet man einen installierten Fuß 30 in seiner Einbauposition im Detail, was besonders gut unter Beiziehung der nochmals vergrößerten Darstellung gemäß der Figur 1c zu entnehmen ist, erkennt man, dass er beweglich mit der Komponente 21 des Innenkessels 2 verbunden ist. Dies wird realisert, indem ein an einem Verbindungsabschnitt 22 der die Komponente 21 des Innenkessels 2 bildenden Seitenwand ein Bolzen 23, der zumindest abschnittsweise mit einem darin eingeschnittenem Gewinde versehen ist, angeschweißt ist, welcher im Langloch 35 geführt wird, und mit einem hier als selbstsichernden Schraube ausgeführten Fixiermittel 24 fixierbar ist, so dass der Rücken 31 des Fußes 30 an der Komponente 21 des Innenkessels 2, genauer deren Verbindungsabschnitt 22 anliegt und im Wesentlichen parallel zur Komponente 21 des Innenkessels 2 verläuft.

Drückt man den Fuß 30 nun an einer seiner Seitenwände 32,33, die als Flächen zum Einleiten einer Verschiebekraft dienen können parallel zum Boden 11 des Außenkessels 10 und zur Komponente 21 des Innenkessels 2 zur in Richtung auf die Rückwand des Klimaschranks 1, so bewegt sich der Bolzen 23 im schräg verlaufenden Langloch 35 nach oben und erzwingt so ein passgenaues Anliegen der Komponente 21 des Innenkessels 2 im Bereich der nicht gezeigten Decke des Außenkessels 10, weil die Gesamthöhe des Systems aus Komponenten 21 des Innenkessels 2 mit daran angeordnetem Fuß 30 größer wird. Auf diese Weise kann also einfach eine wegen ihrer geringeren Höhe problemlos in den Außenkessel 10 einführbare Komponente 21 des Innenkessels 2 dort vorpositioniert werden und einfach durch Druckeinleitung auf die bequem zugänglichen Seitenwände 32,33 des Fußes 30 aus der Zugangsrichtung passgenau in den Außenkessel 10 eingepasst werden, was eine erhebliche Vereinfachung dieses Schritts im Herstellungsprozess mit sich bringt.

### Bezugszeichenliste

- 1: Klimaschrank
- 2: Innenkessel
- 3: Tür
- 4: Regalboden

- 10: Außenkessel
- 11: Boden
- 12: Übergangsbereich
- 13: Seitenwand

- 21: Komponente (des Innenkessels)
- 22: Verbindungsabschnitt
- 23: Bolzen
- 24: Fixiermittel

- 30: Fuß
- 31: Rücken
- 32,33: Seitenwand
- 34: Verstärkung
- 35: Langloch

## Patentansprüche

1. Verfahren zur passgenauen Positionierung eines Innenkessels (2) im Außenkessel (10) eines Klimaschranks (1) mit den Schritten
- Bereitstellen eines Außenkessels (10) mit einer Decke und einem der Decke gegenüber liegenden Boden (11),
- Bereitstellen mindestens einer Komponente (21) eines Innenkessels (2), und
- Positionieren der mindestens einen Komponente (21) des Innenkessels (2) zwischen Decke und Boden (11) des Außenkessels (10),
wobei mindestens eine Komponente (21) des Innenkessels (2) bereitgestellt wird, die eine geringere Höhe hat als die durch den Abstand zwischen der Decke und dem Boden (11) des Außenkessels (10) vorgegebene Höhe des Innenraums des Außenkessels (10) und an der mindestens ein Fuß (30) derart beweglich angeordnet ist, dass die Höhe der mindestens einen bereitgestellten Komponente (21) des Innenkessels (2) einschließlich des mindestens einen daran beweglich angeordneten Fußes (30) variabel ist,
wobei durch eine Veränderung der Position des mindestens einen Fußes (30) bei in dem Außenkessel (10) angeordneter Komponente (21) des Innenkessels (2) eine passgenaue Positionierung herbeigeführt wird, bei der die Komponente (21) des Innenkessels (2) an der Decke des Außenkessels (10) abgestützt ist und der mindestens eine Fuß (30) an dem Boden des Außenkessels (10) abgestützt ist, und
wobei der Fuß (30) in der Position, in der er die passgenaue Positionierung herbeiführt, fixiert wird,
**dadurch gekennzeichnet, dass** die passgenaue Positionierung durch eine Verschiebung der Position des Fußes (30) in einer zum Boden (11) des Außenkessels (10) parallelen Ebene erfolgt.

2. Verfahren nach Anspruch 1,
**dadurch gekennzeichnet, dass** die Verschiebung der Position des Fußes (30) in Richtung parallel zu der Komponente (21) des Innenkessels (2) erfolgt, an der der Fuß (30) angeordnet ist.

3. Klimaschrank (1) mit einem Außenkessel (10) mit einer Decke und einem Boden (11), deren Abstand die Höhe eines Innenraums des Außenkessels (10) definiert, mit einem in dem Außenkessel (10) angeordneten Innenkessel (2) und mit einer zumindest abschnittsweise zwischen dem Außenkessel (10) und dem Innenkessel (2) angeordneten Heiz- und/oder Kühlvorrichtung,
wobei mindestens eine Komponente (21) des Innenkessels (2) eine geringere Höhe hat als die durch den Abstand zwischen der Decke und dem Boden (11) des Außenkessels (10) vorgegebene Höhe des Innenraums des Außenkessels (10) und an der mindestens ein Fuß (30) derart beweglich angeordnet ist, dass die Höhe der mindestens einen bereitgestellten Komponente (21) des Innenkessels (2) einschließlich des mindestens einen daran angeordneten Fußes (30) variabel ist, so dass durch eine Veränderung der Position des mindestens einen Fußes (30) bei in dem Außenkessel (10) angeordneter Komponente (21) des Innenkessels (2) eine passgenaue Positionierung herbeigeführt werden kann, bei der die Komponente (21) des Innenkessels (2) an der Decke des Au-ßenkessels (10) abgestützt ist und der mindestens eine Fuß (30) an dem Boden des Außenkessels (10) abgestützt ist und dass der mindestens eine Fuß (30) mit einem Fixiermittel (24) in dieser Position fixierbar ist,
**dadurch gekennzeichnet, dass** der mindestens eine Fuß (30) so an der Komponente (21) des Innenkessels (2) angeordnet ist, dass die Höhe der mindestens einen bereitgestellten Komponente (21) des Innenkessels (2) mit dem mindestens einen daran angeordneten Fuß (30) durch eine Verschiebung parallel zur durch den Boden (11) des Außenkessels (10) definierten Ebene variiert werden kann.

4. Klimaschrank (1) nach Anspruch 3,
**dadurch gekennzeichnet, dass** der mindestens eine Fuß (30) so an der Komponente (21) des Innenkessels (2) angeordnet ist, dass die Höhe der mindestens einen bereitgestellten Komponente (21) des Innenkessels mit dem mindestens einen daran angeordneten Fuß (30) durch eine Verschiebung parallel zu der Komponente (21) des Innenkessels (2), an der der Fuß (30) angeordnet ist, variiert werden kann.

5. Klimaschrank (1) nach Anspruch 4,
**dadurch gekennzeichnet, dass** die Komponente (21) des Innenkessels (2) mindestens einen Bolzen (23) aufweist und dass der mindestens eine Fuß (30) ein Langloch (35) aufweist, in dem der Bolzen (23) geführt ist, wobei der Abstand des Langlochs (35) von dem dem Boden (11) des Außenkessels (10) zugewandten Ende des Fußes (30) variiert.

6. Klimaschrank (1) nach Anspruch 5,
**dadurch gekennzeichnet, dass** das Langloch (35) unter einem Winkel von etwa 45° relativ zum Boden (11) des Außenkessels (10) verläuft.

7. Klimaschrank (1) nach einem der Ansprüche 4 bis 6, **dadurch gekennzeichnet, dass** der Fuß (30) eine Fläche zum Einleiten einer Verschiebekraft aufweist.

## Claims

1. Method for the precisely fitted positioning of an inner vessel (2) in an outer vessel (10) of a climate chamber (1), having the steps;
- providing an outer vessel (10), having a top and a bottom (11) disposed opposite the top,
- providing at least one component of an inner vessel (2), and
- positioning the at least one component (21) of the inner vessel (2) between the top and the bottom (11) of the outer vessel (10),
wherein at least one component (21) of the inner vessel (2) is provided, which has a smaller height than the height of the interior of the outer vessel, defined by the distance between the top and the bottom (11) of the outer vessel (10), and on which at least one leg (30) is moveably arranged such that the height of the at least one provided component (21) of the inner vessel (2), as well as that of the at least one leg (30) moveably arranged thereupon, are variable,
wherein, by means of a change in the position of the at least one leg (30), a precisely fitted positioning of the component (21) of the inner vessel (2) arranged in the outer vessel (10) is effected, in which the component (21) of the inner vessel (2) rests against the top of the outer vessel (10) and the at least one leg (30) rests against the bottom of the outer vessel (10), and
wherein the leg (30) is fixed in the position in which it effects the precisely fitted positioning,
**characterized in that** the precisely fitted positioning is carried out by means of a shifting of the position of the leg (30) in a plane extending parallel to the bottom (11) of the outer vessel (10).

2. Method in accordance with claim 1,
**characterized in that** the shifting of the position of the leg (30) takes place in a direction parallel to the component (21) of the inner vessel (2) on which the leg (30) is arranged.

3. Climate chamber (1) having an outer vessel (10) with a top and a bottom (11), the distance between which defines the height of an interior of the outer vessel (10), an inner vessel (2) arranged inside of the outer vessel (10) and having a heating and/or cooling device which is at arranged, at least in sections, between the outer vessel (10) and the inner vessel (2),
wherein at least one component (21) of the inner vessel (2) has a smaller height than the height of the interior of the outer vessel, defined by the distance between the top and the bottom (11) of the outer vessel (10), and on which at least one leg (30) is moveably arranged such that the height of the at least one provided component (21) of the inner vessel (2), as well as that of the at least one leg (30) moveably arranged thereupon, are variable, such that a change in the position of the at least one leg (30), a precisely fitted positioning of the component (21) of the inner vessel (2) arranged in the outer vessel (10) is effected, in which the component (21) of the inner vessel (2) rests against the top of the outer vessel (10) and the at least one leg (30) rests against the bottom of the outer vessel (10), and such that the leg (30) can be fixed in this position by means of a fixative (24),
**characterized in that** the at least one leg (30) is arranged on the component (21) of the inner vessel (2) such that the height of the at least one provided component (21) of the inner vessel (2) can be varied with the at least one leg (30) arranged thereupon, by means of a shifting parallel to the plane defined by the bottom (11) of the outer vessel (10).

4. Climate chamber (1) in accordance with claim 3,
**characterized in that** the at least one leg (30) is arranged on the component (21) of the inner vessel (2) such that the height of the at least one provided component (21) of the inner vessel (2) can be varied with the at least one leg (30) arranged thereupon, by means of a shifting parallel to the component (21) of the inner vessel (2), on which the leg (30) is arranged.

5. Climate chamber (1) in accordance with claim 4,
**characterized in that** the component (21) of the inner vessel (2) comprises at least one bolt (23), and **in that** the at least one leg (30) comprises an elongated hole (35), into which the bolt (23) is inserted, wherein the distance of the elongated hole (35) to the end of the leg (30) which faces the bottom (11) of the outer vessel (10) varies.

6. Climate chamber (1) in accordance with claim 5,
**characterized in that** the elongated hole (35) extends at an angle of approximately 45° relative to the bottom (11) of the outer vessel (10).

7. Climate chamber (1) in accordance with any of claims 4 to 6,
**characterized in that** the leg (30) comprises a surface for the application of a shifting force.

## Revendications

1. Procédé de positionnement exact d'une cuve interne (2) dans une cuve externe (10) d'une armoire climatisée (1) comprenant les étapes consistant à :
- fournir une cuve externe (10) avec un dessus et un fond (11) à l'opposé du dessus,
- fournir au moins un composant (21) de la cuve interne (2), et
- positionner ce composant (21) de la cuve interne (2) entre le dessus et le fond (11) de la cuve externe (10),
selon lequel
on fournit au moins un composant (21) de la cuve interne (2) de hauteur inférieure à la hauteur prédéfinie du volume intérieur de la cuve externe (10) par la distance entre le dessus et le fond (11) de la cuve externe (10) et elle est munie de manière mobile d'au moins un pied (30), de façon que la hauteur de ce composant (21) de la cuve interne (2), ainsi fourni, y compris du pied (30) installé sur celle-ci, soit variable,
selon lequel
en modifiant la position du pied (30) du composant (21) de la cuve interne (2) prévu sur la cuve externe (10), on arrive à un positionnement exact pour lequel le composant (21) de la cuve interne (2) s'appuie contre le dessus de la cuve externe (10) et le pied (30) s'appuie contre le fond de la cuve externe (10), et
selon lequel
on fixe le pied (30) à la position dans laquelle il réalise le positionnement exact,
procédé **caractérisé en ce que**
le positionnement exact se fait par le coulissement de la position du pied (30) dans un plan parallèle au fond (11) de la cuve externe (10).

2. Procédé selon la revendication 1,
**caractérisé en ce que**
on coulisse la position du pied (30) dans la direction parallèle au composant (21) de la cuve interne (2) munie du pied (30).

3. Armoire climatisée (1) composée d'une cuve externe (10) avec un dessus et un fond (11) dont la distance définit la hauteur du volume intérieur de la cuve externe (10), avec une cuve interne (2) dans le cuve externe (10) et avec au moins un dispositif de chauffage et/ou de refroidissement au moins par segments, entre la cuve externe (10) et la cuve interne (2),
selon lequel
au moins un composant (21) de la cuve interne (2) a une hauteur inférieure à la hauteur du volume intérieur de la cuve externe (10), définie par la distance entre le dessus et le fond (11) de la cuve externe (10), et ce composant a au moins un pied (30) installé de manière mobile pour que la hauteur de ce composant (21) fourni de la cuve interne (2) y compris le pied (30) monté sur celle-ci, soit variable de façon à permettre, par une modification de la position d'au moins du pied (30) pour le composant (21) de la cuve interne (2), installée dans la cuve externe (10), produise un positionnement exact pour lequel le composant (21) de la cuve interne (2) s'appuie au-dessus de la cuve externe (10) et qu'au moins le pied (30) s'appuie contre le fond de la cuve externe (10), et en ce que au moins le pied (30) soit fixé dans cette position par un moyen de fixation (24),
armoire climatisée **caractérisée en ce que**
au moins le pied (30) est prévu sur le composant (21) de la cuve interne (2) pour pouvoir modifier la hauteur de ce composant fourni (21) de la cuve interne (2) avec le pied (30) prévu sur celle-ci, dans un plan défini par le coulissement parallèle au fond (11) de la cuve externe (10).

4. Armoire climatisée (1) selon la revendication 3,
**caractérisée en ce que**
le pied (30) est prévu sur le composant (21) de la cuve interne (2) pour que la hauteur de ce composant (21) fourni de la cuve interne avec au moins un pied (30) sur celle-ci, puisse, par un coulissement parallèle au composant (21) de la cuve interne (2), être installé sur le pied (30), et puisse être modifié.

5. Armoire climatisée (1) selon la revendication 4,
**caractérisée en ce que**
le composant (21) de la cuve interne (2) comporte au moins un goujon (23) et **en ce que** le pied (30) a un trou oblong (35) pour guider le goujon (23), la distance du trou oblong (35) par rapport à l'extrémité du pied (30) tourné vers le fond (11) de la cuve externe (10), étant variable.

6. Armoire climatisée (1) selon la revendication 5,
**caractérisée en ce que**
le trou oblong (35) fait un angle d'environ 45° par rapport au fond (11) de la cuve externe (10).

7. Armoire climatisée (1) selon l'une des revendications 4 à 6,
**caractérisée en ce que**
le pied (30) a une surface pour appliquer une force de coulissement.
